# EUROPÄISCHE PATENTSCHRIFT

(11) **EP 3 880 416 B1**
(45) Veröffentlichungstag und Bekanntmachung des Hinweises auf die Patenterteilung: **01.01.2025**
(21) Anmeldenummer: 19809704.0
(22) Anmeldetag: 07.11.2019
(51) Int. Cl.: B25J 15/00

(54) **GREIFKÖRPER, GREIFVORRICHTUNG UND VERFAHREN ZUM GREIFEN EINES TRANSPORTMITTELS**
GRIPPING BODY, GRIPPING DEVICE AND METHOD FOR GRIPPING A MEANS OF TRANSPORT
CORPS DE PRÉHENSION, DISPOSITIF DE PRÉHENSION ET PROCÉDÉ DE PRÉHENSION D'UN MOYEN DE TRANSPORT

(30) Priorität: 12.11.2018 DE 102018128257
(43) Veröffentlichungstag der Anmeldung: 22.09.2021
(73) Patentinhaber: AM Metals GmbH, 09633 Halsbrücke (DE)
(72) Erfinder: KRINKE, Martin, 09599 Freiberg (DE); FATEHPOUR, Edison, 56075 Koblenz (DE)
(74) Vertreter: Meissner Bolte Partnerschaft mbB
(86) Internationale Anmeldenummer: PCT/DE2019/100960
(87) Internationale Veröffentlichungsnummer: WO 2020/098875

(56) Entgegenhaltungen:
- EP-A1- 3 053 868
- DE-B4- 102012 106 140
- JP-A- 2006 219 161
- JP-A- 2008 194 770
- JP-A- H 091 488
- JP-A- H10 235 589

## Beschreibung

Die Erfindung betrifft einen Greifkörper zum Greifen eines Transportmittels, spezieller einen Greifkörper zum Greifen einer Transportkiste wie zum Beispiel eines Kleinladungsträgers (KLT). Unter weiteren Gesichtspunkten betrifft die Erfindung eine Greifvorrichtung mit einem derartigen Greifkörper und ein Verfahren zum Greifen eines Transportmittels.

### Stand der Technik

Greif- und Handhabungsvorrichtungen zum Greifen, Bewegen oder Festhalten von Transportmitteln und anderen Gegenständen sind in verschiedener Ausführung bekannt. Beispielsweise werden, an einem Industrieroboter oder einer ähnlichen führenden Vorrichtung montiert, Scherengreifer verwendet, um Transportmittel wie zum Beispiel Kleinladungsträger und andere Transportkisten zu greifen.

Die DE 10 2006 018 502 A1 offenbart einen Greifkopf mit einer Greifeinrichtung zum Greifen von Kleinlastträgern, die wenigstens einen relativ zu dem Kleinlastträger bewegbaren Außengreifer zum Greifen wenigstens eines Randes des Kleinlastträgers aufweist. Der Greifkopf verfügt über eine stabile rechteckige Rahmenkonstruktion und ist um eine Achse drehbar, die im Normalfall vertikal verläuft. Darüber hinaus ist der Greifkopf so ausgebildet, dass er in gewissem Ausmaß verkippen kann, um Schieflagen eines Kleinlastträgers auszugleichen, wenn dieser einseitig mit der Stufe seines Einstapelrandes auf dem oberen Rand eines benachbarten Kleinlastträgers aufliegt.

Derartige Greifer sind jedoch nicht dazu geeignet, eine gegriffenes Transportmittel zu kippen. Zudem weisen sie eine große Zahl von Einzelteilen auf, was zu einem hohen Gewicht führt und die Fertigung der Greifvorrichtung 5 verkompliziert.

Die DE 10 2013 210 187 A1 offenbart eine Greifvorrichtung, aufweisend mindestens zwei Armelemente, wobei mindestens eines einstückig ausgebildet ist. Dieses mindestens eine Armelement umfasst eine entlang der Längserstreckung verlaufende erste und zweite Außenwandung. Es ist mindestens ein Kanal vorgesehen, der sich entlang einer Kanallängsrichtung bereichsweise durch das Armelement erstreckt. Durch eine Druckänderung in dem Kanal ist eine Verformung des Armelements quer zur Kanallängsrichtung erreichbar, so dass das Armelement zum Greifen geringfügig mittels der Verformung verschwenkt wird, um einen zu greifenden Gegenstand zwischen den Armelementen festzuklemmen.

Die Anwendung eines derartigen Greifers auf Transportmittel ist jedoch problematisch, da die geringen Klemmkräfte zum Handhaben von 20 Transportmitteln, die typischerweise die Größe einer auch von Menschen handhabbaren Kiste aufweisen, nicht ausreichen.

Aus der DE 10 2012 106 140 B4 geht eine Greifanordnung zum Halten und Umschlagen eines kubischen Behälters hervor, die Aufnahmemittel aufweist, die jeweils formschlüssig mit einem ersten Halteprofilbereich eines aufgenommenen Behälters koppelbar sind. Weiterhin sind zwei verstellbare Halteeinrichtungen vorgesehen, welche zwischen einer Halte- und einer Freigabestellung verstellbar sind und die in ihrer Haltestellung jeweils mit einem zweiten Halteprofilbereich koppelbar sind, wobei die Halteprofilbereiche rechtwinklig zueinander verlaufen. Die Greifanordnung weist ein verstellbares Anschlagelement auf, das zwischen einer Fixier- und einer Freigabestellung verstellbar ist und in seiner Fixierstellung am aufgenommenen Behälter angreift und diesen mit seinem ersten Halteprofilbereich in einer definierten Lage zu den Aufnahmemitteln fixiert.

Die JP 2008 194 770 A beschreibt eine Greifvorrichtung, bei der ein Kolben abgesenkt wird, wenn Luft in einen Zylinder aus einem Verbindungsloch einer Grundplatte in einem offenen Zustand geschickt wird, und entsprechende Schubstangen, die an entsprechenden Teilen in vier Ecken eines Hauptkörpers frei verschiebbar in der vertikalen Richtung errichtet sind, werden auch mit dem Absenken des Kolbens abgesenkt. Wenn die jeweiligen Schubstangen abgesenkt werden, werden Teile der jeweiligen Eingriffselemente durch eine Keilwirkung, die von den jeweiligen Bewegungen der Schubstangen begleitet wird, in einen Innenraum des Körpers vorgeschoben, so dass die Teile der jeweiligen Eingriffselemente an enge Teile von zylindrischen Flaschen gedrückt werden und mit diesen in Eingriff kommen. Dieser Eingriff ermöglicht es der Greifvorrichtung, einen Greifzustand herzustellen, der das Greifen von Flaschen ermöglicht. Wenn der Luftdruck im Zylinder im Greifzustand abgelassen wird, heben sich der Kolben und die jeweiligen Schubstangen, und die Greifvorrichtung kommt in einen offenen Zustand.

Die Aufgabe der Erfindung besteht darin, eine flexible Handhabung von Transportmitteln mittels einer einfachen und leichten Greifvorrichtung zu ermöglichen.

Diese Aufgabe wird durch einen Greifkörper mit Merkmalen gemäß Patentanspruch 1, durch eine Greifvorrichtung mit Merkmalen gemäß Patentanspruch 10 sowie durch ein Verfahren mit Merkmalen gemäß Patentanspruch 12 gelöst. Weiterbildungen sind in abhängigen Patentansprüchen angegeben.

Die Erfindung betrifft einen Greifkörper zum Greifen eines Transportmittels. Unter einem Transportmittel ist hierbei ein Betriebsmittel wie zum Beispiel ein Behälter zu verstehen, das zum Transport von Gütern oder Personen dient. Der Greifkörper weist mindestens eine seitliche Stützfläche, die das Transportmittel zu einer Seite des Transportmittels hin abstützt, eine vertikal verlaufende erste Aufnahmenut zur Aufnahme einer ersten Rippe des Transportmittels und eine erste zylindrische Kavität zur Aufnahme eines Riegelelements auf, die zur Seite des Transportmittels hin geöffnet und gegenüber einer Erstreckungsebene der ersten Aufnahmenut geneigt ist. Die Ausdrücke "geneigt" und "Neigung" sind in der vorliegenden Beschreibung und den Ansprüchen durchweg im Sinne von "nicht parallel" gebraucht, so dass hier die Zylinderachse der ersten zylindrischen Kavität nicht parallel zur Erstreckungsebene der ersten Aufnahmenut verläuft. Zwischen der Zylinderachse der ersten zylindrischen Kavität und der Erstreckungsebene der ersten Aufnahmenut kann z. B. ein Winkel von 45° oder von 90° gebildet sein, nicht jedoch ein Winkel von 0° oder 180°.

Mit der ersten Aufnahmenut des Greifkörpers ist eine flächenartig entlang einer Erstreckungsebene ausgedehnte nutförmige Vertiefung am Greifkörper gemeint, in die eine entsprechend flächenartig entlang einer Erstreckungsebene ausgedehnte Rippe eines typischen Transportmittels aufnehmbar ist. Beispielsweise kann die erste Aufnahmenut durch eine Negativform einer oder eines Teils einer vertikal verlaufenden Verstärkungsrippe gegeben sein, wie sie Transportkisten und ähnliche Transportmittel typischerweise aufweisen, entsprechend zum Beispiel einem oder mehreren Typen von Kleinladungsträgern gemäß der Norm VDA 4500, DIN 30 820 und/oder EN 13 199. Das Vorhandensein der ersten Aufnahmenut ermöglicht, ein Transportmittel bereits durch die Aufnahme seiner ersten Rippe in seiner Beweglichkeit in einer Richtung quer zur Aufnahmerichtung einzuschränken.

Der Begriff "zylindrische Kavität" bezeichnet eine längliche Ausnehmung (Vertiefung), die einen zum Beispiel kreisförmigen, eckigen oder anderen Querschnitt aufweisen kann. Dass sie zur Aufnahme eines Riegelelements ausgebildet und zur Seite des Transportmittels hin geöffnet ist, führt dazu, dass ein in der zylindrischen Kavität aufgenommenes Riegelelement längs der zylindrischen Kavität aus der Öffnung der zylindrischen Kavität hinaus verschoben und damit auf ein Transportmittel zubewegt werden kann, das mit seiner ersten Rippe in der ersten Aufnahmenut aufgenommen ist. Mit der Neigung, die die erste zylindrische Kavität relativ zur Erstreckungsebene der ersten Aufnahmenut aufweist, bewegt sich das Riegelelement hierbei in einer Richtung, die entsprechend zur Aufnahmerichtung der ersten Rippe in der ersten Aufnahmenut geneigt ist. Folgerichtig ermöglicht es der beschriebene Greifkörper, ein Transportmittel, das eine erste Rippe und eine geeignet neben der ersten Rippe positionierte, der ersten Rippe gegenüber geneigte Zentrierbohrung (Bohrung, Ausnehmung, Öffnung oder dergleichen) aufweist, durch Aufnehmen der ersten Rippe in der ersten Aufnahmenut des Greifkörpers und Verschieben eines Riegelelements aus der zylindrischen Kavität in die Zentrierbohrung des Transportmittels den Greifkörper durch vollständigen Formschluss mit dem Transportmittel zu verriegeln. Angemerkt wird, dass vorliegend der Begriff "Formschluss" in dem Sinne zu verstehen ist, dass in einem die Handhabung des Transportmittels nicht beeinträchtigenden Maße auch Spiel vorhanden sein kann.

Gemäß einer bevorzugten Weiterbildung die mindestens eine zylindrische Kavität horizontal. Dies ermöglicht vorteilhaft das Greifen eines nach oben geöffneten Transportmittels an dessen seitlicher Wandung, durch welche eine horizontale Zentrierbohrung führt. Zudem ermöglicht der rechte Winkel eine besonders stabile Verriegelung.

Gemäß einer bevorzugten Weiterbildung ist die mindestens eine zylindrische Kavität zur ersten Aufnahmenut hin geneigt. Dies ermöglicht eine besonders kompakte und stabile Bauweise des Greifkörpers.

Gemäß einer bevorzugten Weiterbildung umfasst der Greifkörper eine zweite zylindrische Kavität zur Aufnahme eines zweiten Riegelelements, die zur Seite des Transportmittels hin geöffnet und relativ zur ersten zylindrischen Kavität geneigt ist. Mit der Neigung, die die zweite zylindrische Kavität relativ zur ersten zylindrischen Kavität aufweist, bewegen sich die Riegelelemente hierbei in Richtungen, die relativ zueinander geneigt (das heißt nicht zueinander parallel) sind. Folgerichtig ermöglicht es der beschriebene Greifkörper, ein Transportmittel, das zwei relativ zueinander geneigte Zentrierbohrungen (Bohrungen, Ausnehmungen, Öffnungen oder dergleichen) aufweist, durch Verschieben der Riegelelemente aus der ersten und zweiten zylindrischen Kavität in die Zentrierbohrungen des Transportmittels den Greifkörper durch vollständigen Formschluss mit dem Transportmittel zu verriegeln.

Dies ermöglicht auf einfache Weise eine stabile Verriegelung zum Beispiel an einer Kante eines bevorzugt quaderförmigen Transportmittels, wie einer Transportkiste, durch Anordnung zweier Riegelelemente unterschiedlicher Bewegungsrichtung in den beiden zylindrischen Kavitäten, da das erste und zweite Riegelelement bei der mechanischen Bewegung auf Merkmale des Transportmittels zubewegt werden können, die sich an unterschiedlichen Seiten des Transportmittels befinden. Insbesondere sind das erste und zweite Riegelelement ausgebildet, sich bei der mechanischen Bewegung entlang einander kreuzender Achsen zu bewegen, was einen besonders sicheren Formschluss bei kleiner Bauweise ermöglicht.

Gemäß einer bevorzugten Weiterbildung sind am Greifkörper die beiden zylindrischen Kavitäten beiderseits der ersten Aufnahmenut angeordnet, was ermöglicht, die Stabilität bei kleiner Bauweise weiter zu verbessern.

Gemäß einer bevorzugten Weiterbildung ist im Greifkörper ferner eine zweite Aufnahmenut zur Aufnahme einer zweiten Rippe des Transportmittels gebildet. Mittels der ersten und zweiten Aufnahmenut, nämlich indem diese zueinander geneigte Erstreckungsebenen aufweisen, kann der Greifkörper einen Formschluss mit dem Transportmittel bezüglich aller Raumrichtungen außer der Aufnahmerichtung des Transportmittels in die Aufnahmenuten herstellen, was durch Entlastung des mindestens einen Riegelelements ermöglicht, die Stabilität bei kleiner Bauweise weiter zu verbessern. Besonders kompakt kann der Greifkörper gebildet werden, wenn die zweite Aufnahmenut die erste Aufnahmenut kreuzt.

Gemäß einer bevorzugten Weiterbildung weist der Greifkörper mindestens eine obere Stützfläche auf, die ausgebildet ist, das Transportmittel nach oben hin abzustützen. Dies hat den Vorteil, während des Haltens und Transportierens des Transportmittels die auf die Riegelelemente wirkenden mechanischen Belastungen zu verringern, was eine leichtere Bauweise der Riegelelemente ermöglicht.

Gemäß einer bevorzugten Weiterbildung weist der Greifkörper einen metallischen Werkstoff auf. Die Vollständigkeit des erzielten Formschlusses mit dem Transportmittel ermöglicht in Verbindung mit der großen Stabilität des metallischen Greifkörpers eine flexible Handhabung des Transportmittels wie zum Beispiel auch das Kippen einer Transportkiste.

Gemäß einer bevorzugten Weiterbildung ist der Greifkörper durch ein generatives Fertigungsverfahren hergestellt. Dies ermöglicht auf einfache Weise die Bereitstellung einer besonders komplexen Form des Greifkörpers, die einen besonders zuverlässigen und stabilen Formschluss ermöglicht. Vorzugsweise handelt es sich bei dem generativen Fertigungsverfahren um selektives Laserschmelzen oder selektives Lasersintern.

Gemäß einer bevorzugten Weiterbildung ist eine im metallischen Werkstoff ausgebildete Medienführung zum Herbeiführen einer mechanischen Bewegung des ersten (oder auch des ersten und zweiten) Riegelelements vorgesehen. Dies ermöglicht, den bereits durch das Aufnehmen der ersten Rippe eines zu greifenden Transportmittels in der Aufnahmenut teilweise erfolgenden Formschluss zu einer vollständigen Verriegelung oder einem vollständigen Formschluss zu komplettieren, ohne dass dazu eine Vielzahl zusätzlicher Teile wie äußerlicher Medienführleitungen samt dem einhergehenden Fertigungsaufwand und Gewicht erforderlich wären. Eine Verriegelung beziehungsweise ein Formschluss bedeuten die Verriegelung beziehungsweise den Formschluss einer den Greifkörper und das erste (beziehungsweise erste und zweite) Riegelelement enthaltenden Greifvorrichtung, die der Greifkörper im Zusammenwirken mit dem ersten (beziehungsweise ersten und zweiten) Riegelelement und gegebenenfalls weiteren Teilen herstellt. Unter Medienführung ist jede Art von Pneumatik-, Hydraulik- oder Elektroleitung oder eine Kombination von dergleichen Leitungen zu verstehen.

Gemäß einer bevorzugten Weiterbildung ist die Medienführung als Druckluftleitung ausgebildet. Dies ist besonders vorteilhaft, da kein Aufwand für Rückleitungen für Hydraulikflüssigkeit oder das Einziehen elektrischer Leitungen erforderlich ist.

Gemäß einer bevorzugten Weiterbildung ist das Transportmittel eine Transportkiste, insbesondere ein Kleinladungsträger (KLT). Die weite Verbreitung und die Normung von Kleinladungsträgern in VDA 4500, DIN 30 820 und EN 13 199 ermöglicht, den Greifkörper mit einer großen Zahl von Transportmitteln kompatibel herzustellen.

Unter einem anderen Gesichtspunkt betrifft die Erfindung eine Greifvorrichtung mit einem wie oben beschriebenen Greifkörper und einem ersten Riegelelement, das in der ersten zylindrischen Kavität längsverschieblich angeordnet ist. Dies ermöglicht auf eine einfache Weise eine stabile Verriegelung durch Aufnahme einer ersten Rippe eines Transportmittels in der ersten Aufnahmenut des Greifkörpers und Einführen des ersten Riegelelements längs der relativ zur Erstreckungsebene der vertikal verlaufenden ersten Aufnahmenut geneigten Richtung der ersten zylindrischen Kavität in eine Zentrierbohrung (Bohrung, Öffnung oder dergleichen) des Transportmittels.

Gemäß einer bevorzugten Weiterbildung umfasst die erfindungsgemäße Greifvorrichtung ein erstes Riegelelement, das in der ersten zylindrischen Kavität längsverschieblich angeordnet ist, und ein zweites Riegelelement, das in der zweiten zylindrischen Kavität längsverschieblich angeordnet ist. Damit bewegen das erste und zweite Riegelelement sich in jeweils unterschiedlichen Richtungen. Dies ermöglicht ebenfalls auf einfache Weise eine stabile Verriegelung, insbesondere zum Beispiel an einer Kante eines bevorzugt quaderförmigen Transportmittels wie einer Transportkiste, da das erste und zweite Riegelelement bei der mechanischen Bewegung auf Merkmale des Transportmittels zubewegt werden können, die sich an unterschiedlichen Seiten des Transportmittels befinden. Insbesondere sind das erste und zweite Riegelelement ausgebildet, sich bei der mechanischen Bewegung entlang einander kreuzenden Achsen zu bewegen, was einen besonders sicheren Formschluss bei kleiner Bauweise ermöglicht.

Unter einem anderen Gesichtspunkt betrifft die Erfindung ein Verfahren zum Greifen eines Transportmittels. Das Verfahren umfasst einen Schritt des Aufnehmens einer ersten Rippe des Transportmittels in einer vertikal verlaufenden ersten Aufnahmenut eines Greifkörpers, einen Schritt des Abstützens des Transportmittels zur Seite des Transportmittels hin an mindestens einer seitlichen Stützfläche des Greifkörpers und einen Schritt des Bewegens mindestens eines Riegelelements aus einer zylindrischen Kavität des Greifkörpers in relativ zu einer Erstreckungsebene der ersten Aufnahmenut geneigter Richtung zur Seite des Transportmittels, um den Greifkörper mit dem Transportmittel zu verriegeln. Mit anderen Worten wird auf diese Weise ein Formschluss des Greifkörpers mit dem Transportmittel herstellt.

Gemäß einer bevorzugten Weiterbildung umfasst das Verfahren den Schritt des Abstützens des Transportmittels zu einer Seite des Transportmittels hin an mindestens einer seitlichen Stützfläche des Greifkörpers sowie einen Schritt des Bewegens eines ersten Riegelelements aus einer ersten zylindrischen Kavität des Greifkörpers sowie eines zweiten Riegelelements aus einer zweiten zylindrischen Kavität des Greifkörpers in relativ zueinander geneigten Richtungen zur Seite des Transportmittels, um den Greifkörper mit dem Transportmittel zu verriegeln. Hierdurch wird ebenso ein Formschluss des Greifkörpers mit dem Transportmittel hergestellt.

Gemäß einer bevorzugten Weiterbildung des Verfahrens ist das Transportmittel eine Transportkiste. Hierdurch kann der Greifkörper zur Handhabung einer großen Zahl unterschiedlicher Güter verwendet werden, die in der Transportkiste transportierbar sind. Vorzugsweise ist die Transportkiste als ein Kleinladungsträger ausgebildet.

Gemäß einer bevorzugten Weiterbildung wird mittels der mechanischen Bewegung das erste (beziehungsweise das erste und zweite) Riegelelement, ausgehend von dem Greifkörper, in mindestens eine Bohrung des Transportmittels (zum Beispiel eine Zentrierbohrung) eingeführt, wie sie insbesondere Kleinladungsträger und andere Transportkisten typischerweise aufweisen. Dies ermöglicht einen besonders stabilen Formschluss und eine präzise Positionierung des Transportmittels.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine schematische Schnittansicht einer Greifvorrichtung gemäß einer Ausführungsform der Erfindung sowie eines ausschnitthaft dargestellten Transportmittels.
- Fig. 2:: eine schematische Schnittansicht des Transportmittels und der Greifvorrichtung aus Fig. 1 nach Aufnahme des Transportmittels in der Greifvorrichtung.
- Fig. 3:: eine schematische Schnittansicht des Transportmittels und der Greifvorrichtung aus Fig. 1 in einem Zustand, nachdem die Greifvorrichtung einen Formschluss mit dem Transportmittel hergestellt hat.
- Fig. 4:: eine Vorderansicht eines Greifkörpers gemäß einer Ausführungsform, der in der Greifvorrichtung aus Fig. 1 verwendet wird.
- Fig. 5:: eine Rückansicht des Greifkörpers aus Fig. 4.

Angemerkt wird, dass räumliche Richtungsangaben wie "oben", "unten", "vorn", "hinten", "vertikal", "horizontal" und so weiter in der gesamten Beschreibung nicht einschränkend gemeint sind, sondern sich lediglich auf eine typische Orientierung von Greifvorrichtung und/oder Transportmitteln während deren Verwendung beziehen. Ohne Beschränkung der Allgemeinheit wurde dabei diejenige Seite der Greifvorrichtung als vorn angenommen, die beim Greifen eines Transportmittels diesem zugewandt ist.

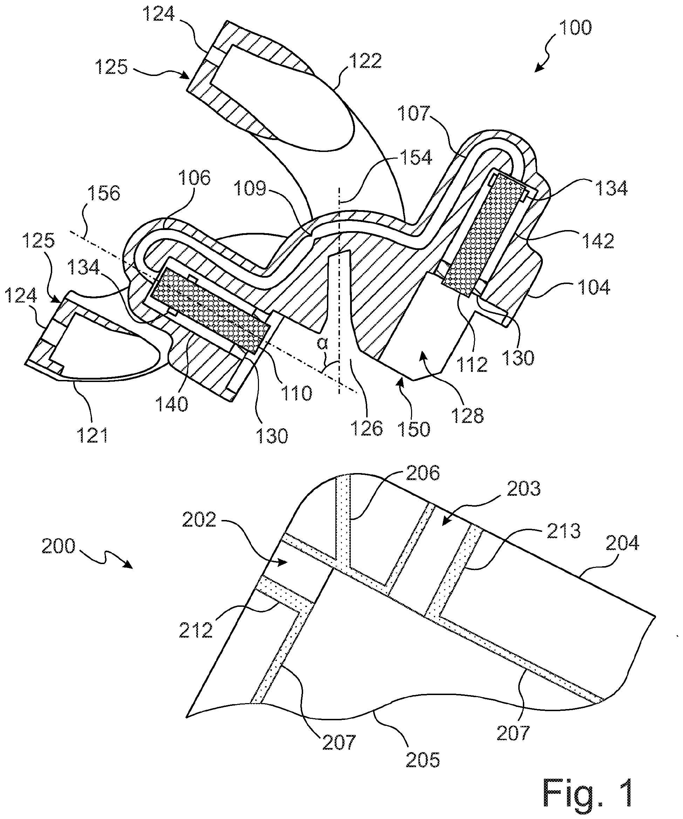

Figur 1 zeigt, in einer gemeinsam waagrecht geschnittenen Ansicht von oben, einen Ausschnitt einer Transportkiste 200, die ein Beispiel eines Transportmittels darstellt, und eine Greifvorrichtung 100 zum Greifen eines Transportmittels von gleicher oder ähnlicher Ausgestaltung wie die Transportkiste 200.

Die Transportkiste 200 ist zum Beispiel ganz oder überwiegend aus Kunststoff gefertigt und weist eine rechteckige Bodenplatte 205 auf. Von den Kanten der Bodenplatte 205 erstrecken sich Seitenwände 207 aufwärts bis zu einem oberen Kistenrand (nicht gezeigt), der sich in einer vorbestimmten Höhe über der Bodenplatte 205 befindet. Außerhalb der Seitenwände 207 ist oberhalb der Bodenplatte 205 eine Horizontalrippe 204 gebildet, die flächenartig waagrecht nach außen ragt und der Transportkiste 200 den Grundriss eines Rechtecks mit abgerundeten Ecken verleiht.

Hiervon umfasst der in Fig. 1 gezeigte Ausschnitt der Transportkiste 200 den Bereich einer der vier Ecken des Rechtecks. Im dargestellten Bereich ist entlang einer vertikal durch das Zentrum (nicht gezeigt) der Bodenplatte 205 verlaufenden Ebene eine flächenartige Vertikalrippe 206 gebildet, die die Horizontalrippe 204 kreuzt. Die Vertikalrippe 206 erstreckt sich in vertikaler Richtung über im Wesentlichen die gesamte Höhe der Transportkiste 200, während sie in horizontaler Richtung vom Verbindungsbereich der beiden durch die Ecke verbundenen Seitenwände 207 bis zur Außenkante der Horizontalrippe 204 reicht. Beispielsweise kann die Vertikalrippe 206 in vertikaler Richtung einen umlaufenden unteren Stapelrand (nicht gezeigt) mit einem umlaufenden oberen Stapelrand (nicht gezeigt) der Transportkiste 200 verbinden. Beiderseits der Vertikalrippe 206 sind oberhalb der Horizontalrippe 204 auf Höhe der Schnittebene von Fig. 1 jeweils in einer der an der Ecke verbundenen Seitenwände 207 eine erste Zentrierbohrung 202 und eine zweite Zentrierbohrung 203 gebildet. Die Zentrierbohrungen 202, 203 durchdringen die jeweilige Seitenwand 207, 207 und sind nach außen durch eine zugehörige erste zylinderröhrenförmige Anformung 212 und zweite zylinderröhrenförmige Anformung 213 verlängert, die in der Vertikalprojektion bündig mit der Horizontalrippe 204 abschließen. Die Mittelachsen der Zentrierbohrungen 202, 203 kreuzen sich unter einem rechten Winkel.

Die Bereiche der übrigen, außerhalb des in Fig. 1 gezeigten Bereiches liegenden Ecken der Transportkiste 200 können gleichartig, zum Beispiel spiegelsymmetrisch bezüglich parallel zu den Seitenwänden 207 durch das Zentrum der Bodenplatte 205 verlaufender Ebenen, oder abweichend gestaltet sein. Bei der Transportkiste 200 kann es sich um einen Kleinladungsträger gemäß dem vom Verband der Automobilindustrie (VDA) genormten System von Kleinladungsträgern (KLT) handeln, die in vielfach automatisierten Prozessen in der Lagerung und Fertigung unterschiedlicher Branchen verwendet werden. Genormt sind derartige Kleinladungsträger unter anderem durch die Normen VDA 4500, DIN 30 820 und EN 13 199.

Die Greifvorrichtung 100 umfasst als Hauptbestandteil einen Greifkörper 104 zum Greifen der Transportkiste 200 oder eines ähnlichen Transportmittels. Der Greifkörper 104 weist einen metallischen Werkstoff auf, der eine Legierung oder auch ein reines Metall sein kann, und ist mittels eines generativen Fertigungsverfahrens hergestellt, beispielsweise durch selektives Laserschmelzen oder selektives Lasersintern.

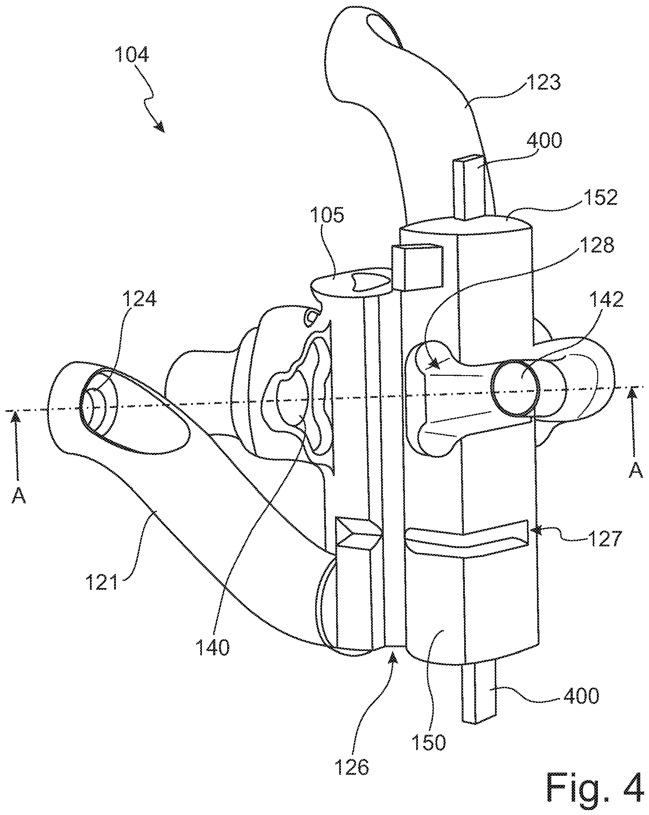

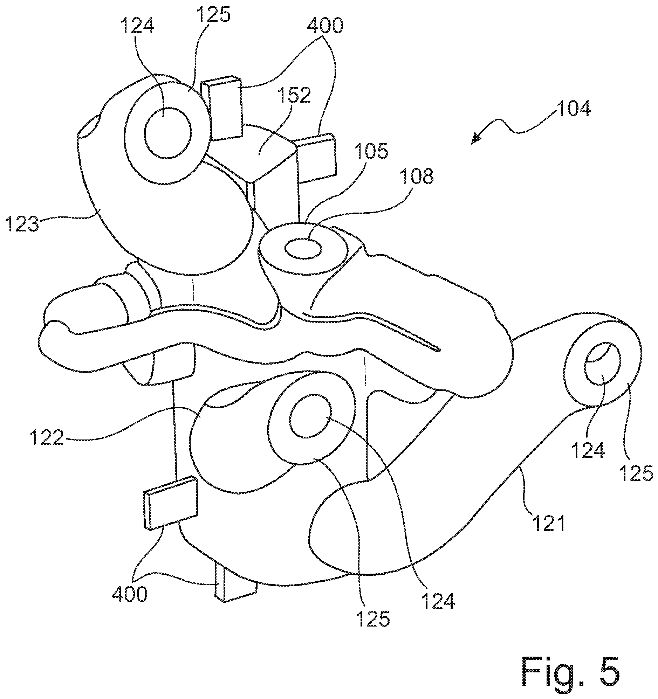

Aus unterschiedlichen Perspektiven zeigen Fig. 4 und 5 den Greifkörper 104 allein, das heißt ohne zusätzliche Bestandteile der Greifvorrichtung 100, in einem Rohzustand nach Abschluss des generativen Fertigungsverfahrens. In diesem Rohzustand weist der Greifkörper 104 herstellungsbedingt noch mehrere flachstabförmige Anformungen 400 auf, die in einem Nachbearbeitungsschritt durch Fräsen oder Ähnliches entfernt werden. In Fig. 4 ist die Schnittebene der Schnittdarstellung von Fig. 1 durch eine strichpunktierte Linie A-A markiert.

Im Greifkörper 104 gebildet ist eine vertikale Aufnahmenut 126 zur Aufnahme der Vertikalrippe 206 der Transportkiste 200. Zudem ist im Greifkörper 104 eine horizontale Aufnahmenut 127 zur gleichzeitigen Aufnahme der Horizontalrippe 204 der Transportkiste 200 gebildet, wobei beide Aufnahmenuten 126, 127 einander kreuzen. Die Blickrichtung der Vorderansicht des Greifkörpers 104 von Fig. 4 ist derart, dass der Betrachter in die Aufnahmenuten 126, 127 hinein auf deren Grund blickt. Außerdem ist im Greifkörper eine Aufnahmevertiefung 128 zur Aufnahme der zweiten zylinderröhrenförmigen Anformung 213 der Transportkiste 200 gebildet. An der der Transportkiste 200 zugewandten Seite weist der Greifkörper 104 außerdem eine seitliche Stützfläche 150 zur seitlichen Abstützung der Transportkiste 200 auf, ferner an seinem oberen Ende eine obere Stützfläche 152 zur Abstützung der Transportkiste 200 nach oben. Im vorliegenden Ausführungsbeispiel dient die seitliche Stützfläche 150 dazu, eine Seitenwand 207 der Transportkiste 200 seitlich zur Transportkiste 200 hin abzustützen, während die obere Stützfläche 152 dazu dient, einen oberen Stapelrand (nicht gezeigt) der Transportkiste 200 nach oben abzustützen. Die Aufnahmenuten 126, 127, die seitliche Stützfläche 150, die obere Stützfläche 152 sowie die Aufnahmevertiefung 128 sind zueinander derart angeordnet, dass sie gemeinsam eine Aufnahmeformation zur Aufnahme der Transportkiste 200 (des Transportmittels) von der Vorderseite des Greifkörpers 104, das heißt der Blickrichtung von Fig. 4, her bilden.

Der Greifkörper 104 weist ferner drei Befestigungsarme 121, 122, 123 auf, die dazu dienen, die Greifvorrichtung 100 an einer führenden und/oder abstützenden Vorrichtung wie zum Beispiel einem Industrieroboter (nicht gezeigt) zu befestigen. Die Befestigungsarme 121, 122, 123 weisen an ihren Enden jeweils eine kreisringförmige Montagefläche 125 auf, durch deren Zentrum eine zugehörige Schraubenloch 124 führt. Mit ihren Enden spannen die drei Befestigungsarme 121, 122, 123 eine Befestigungsebene auf, in welcher die Montageflächen 125 komplanar angeordnet sind.

Im metallischen Werkstoff des Greifkörpers 104 sind eine erste zylindrische Kavität 140 und eine zweite zylindrische Kavität 142 von jeweils zylindrischer Form gebildet, deren Zylinderachsen einander unter einem rechten Winkel kreuzen. Die erste zylindrische Kavität 140 und die zweite zylindrische Kavität 142 sind jeweils relativ zu einer Erstreckungsebene 154 der ersten Aufnahmenut 126 geneigt, d. h. zu dieser nicht parallel sind. Dies bedeutet am Beispiel der ersten zylindrischen Kavität 140, dass der Winkel α zwischen der Zylinderachse 156 der ersten zylindrischen Kavität 140 und der Erstreckungsebene 154 der ersten Aufnahmenut 126 ungleich 0° ist.

Die erste zylindrische Kavität 140 ist derart gebildet, dass sie bei Aufnahme der Transportkiste 200 in der Aufnahmeformation 126, 127, 128 des Greifkörpers 104 außerhalb der Öffnung der ersten Zentrierbohrung 202 zu liegen kommt, so dass die Zylinderachsen der ersten zylindrischen Kavität 140 und der ersten Zentrierbohrung 202 zusammenfallen. Die zweite zylindrische Kavität 142 ist derart gebildet, dass sie bei Aufnahme der Transportkiste 200 in der Aufnahmeformation 126, 127, 128 außerhalb der Öffnung der zweiten Zentrierbohrung 203 zu liegen kommt, so dass die Zylinderachsen der zweiten zylindrischen Kavität 142 und der zweiten Zentrierbohrung 203 zusammenfallen.

Im metallischen Werkstoff des Greifkörpers 104 ist außerdem eine an die beiden zylindrischen Kavitäten 140, 142 angeschlossene Medienführung 106, 107, 108 zum Führen von Druckluft ausgebildet. Ein erster Medienführungsabschnitt 106 der Medienführung 106, 107, 108 verbindet waagrecht verlaufend das innenliegende Ende der ersten zylindrischen Kavität 140 mit einer Gabelungsstelle 109, die sich im metallischen Werkstoff rückwärtig des Nutgrunds der vertikalen Aufnahmenut 126 befindet. Ein zweiter Medienführungsabschnitt 107 der Medienführung 106-108 verbindet ebenfalls waagrecht verlaufend das innenliegende Ende der zweiten zylindrischen Kavität 142 mit der Gabelungsstelle 109, welche ein aufwärts verlaufender dritter Medienführungsabschnitt 108 der Medienführung 106, 107, 108 mit einem Medienanschluss 105 verbindet, der an der Rückseite des Greifkörpers 104 ausgebildet ist. Am Medienanschluss 105 ist der dritte Medienführungsabschnitt 108 bis zur Oberfläche des Greifkörpers 104 geführt.

Als weitere Teile der Greifvorrichtung 100 sind in der ersten zylindrischen Kavität 140 ein erster Verriegelungsbolzen 110 und in der zweiten zylindrischen Kavität 142 ein zweiter Verriegelungsbolzen 112 als Riegelelemente angeordnet. Die Verriegelungsbolzen 110, 112 weisen eine zylindrische Grundform auf, deren Zylinderachse mit derjenigen der jeweils umgebenden zylindrischen Kavität 140, 142 übereinstimmt. Am äußeren Ende der zylindrischen Kavitäten 140, 142 ist jeweils eine ringförmige Gleitdichtung 130 montiert, in der die Verriegelungsbolzen 110, 112 unter luftdichtem Abschluss der zylindrischen Kavitäten 140, 142 längs ihrer Zylinderachsen verschieblich gehalten sind. Nahe dem innenliegenden Ende der Verriegelungsbolzen 110, 112 sind ringförmig vorspringende Anschläge 134 vorgesehen, die die Verriegelungsbolzen 110, 112 gegen Herausfallen sichern. Hierbei befindet sich der Anschlag 134 des ersten Verriegelungsbolzens 110 näher an dessen äußerem Ende als der Anschlag 134 des zweiten Verriegelungsbolzens 112 sich am äußeren Ende des letzteren befindet. Die Eindringtiefe der Verriegelungsbolzen 110 kann durch die Position des jeweils zugehörigen Anschlags 134 angepasst werden.

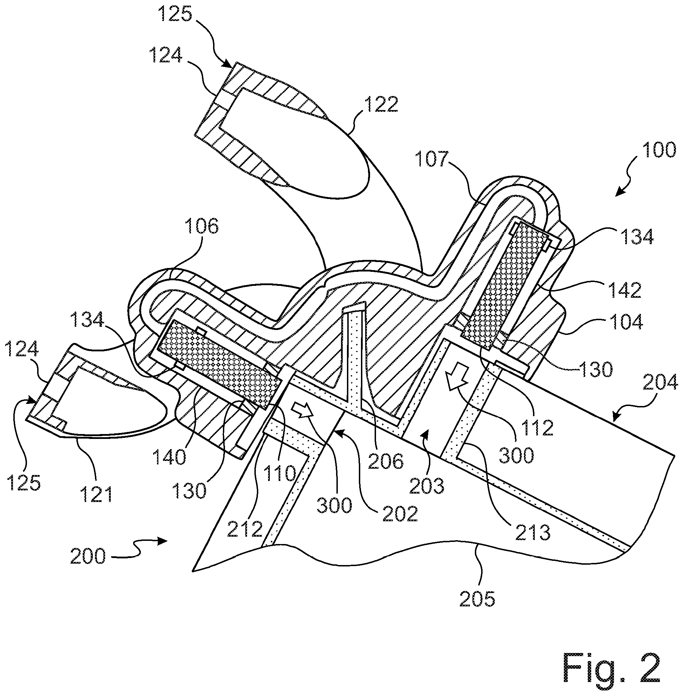

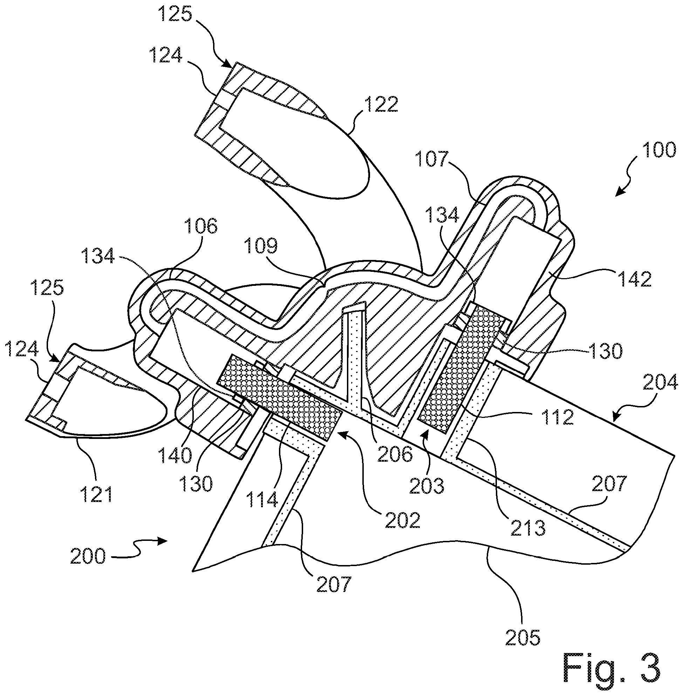

Im Betrieb der Greifvorrichtung 100 wird zunächst die Greifvorrichtung 100, wie in Fig. 1 gezeigt, z. B. einem Industrieroboter (nicht gezeigt) in Richtung von der Vorderseite des Greifkörpers 104 her, d. h. entgegen der Blickrichtung von Fig. 4, an eine Transportkiste 200 herangeführt, bis der in Fig. 2 gezeigte Zustand, erreicht wird, wo die Transportkiste 200 oder ein ähnliches Transportmittel in der Aufnahmeformation 126, 127, 128, 150, 152 aufgenommen ist. In einem weiteren Schritt wird Druckluft über den Medienanschluss 105 und die Medienführung 106, 107, 108 in die zylindrischen Kavitäten 140, 142 eingeleitet, so dass die Verriegelungsbolzen 110, 112 bis zur Berührung des jeweiligen Anschlags 134 mit der zugehörigen Gleitdichtung 130 aus den zylindrischen Kavitäten 140, 142 aus- und in die Zentrierbohrungen 202, 203 der Transportkiste einfahren, wobei durch diese mechanische Bewegung 300 ein Formschluss des Greifkörpers 104 bzw. der Greifvorrichtung 100 mit der Transportkiste 200 hergestellt wird. In diesem Zustand, der in Fig. 3 dargestellt ist, kann nun zum Beispiel die Transportkiste 200 mittels der Greifvorrichtung 100 und des sie führenden Industrieroboters transportiert und/oder gekippt werden. Um die Greifvorrichtung 100 wieder von der Transportkiste 200 zu lösen, werden die beschriebenen Schritte in umgekehrter Richtung und Schrittfolge ausgeführt.

### Bezugszeichenliste

- 100: Greifvorrichtung
- 104: Greifkörper
- 105: Medienanschluss
- 106: erster Medienführungsabschnitt
- 107: zweiter Medienführungsabschnitt
- 108: dritter Medienführungsabschnitt
- 109: Gabelungsstelle
- 110: erster Verriegelungsbolzen, Riegelelement
- 112: zweiter Verriegelungsbolzen, Riegelelement
- 121: erster Befestigungsarm
- 122: zweiter Befestigungsarm
- 123: dritter Befestigungsarm
- 124: Schraubenloch
- 125: Montagefläche
- 126: vertikale Aufnahmenut (erste Aufnahmenut)
- 127: horizontale Aufnahmenut (zweite Aufnahmenut)
- 128: Aufnahmevertiefung
- 130: Gleitdichtung
- 134: Anschlag
- 140: erste zylindrische Kavität
- 142: zweite zylindrische Kavität
- 150: seitliche Stützfläche
- 152: obere Stützfläche
- 154: Erstreckungsebene
- 156: Achse der ersten zylindrischen Kavität
- 200: Transportkiste (Transportmittel)
- 202, 203: Zentrierbohrung, geneigte Bohrungen
- 204: Horizontalrippe (zweite Rippe)
- 205: Bodenplatte
- 206: Vertikalrippe (erste Rippe)
- 212, 213: zylinderröhrenförmige Anformung
- 207: Seitenwand
- 300: mechanische Bewegung
- 400: Anformung

## Patentansprüche

1. Greifkörper (104) zum Greifen eines Transportmittels (200), aufweisend:
mindestens eine seitliche Stützfläche (150), welche das Transportmittel (200) zu einer Seite des Transportmittels (200) hin abstützt;
eine zur Seite des Transportmittels (200) hin geöffnete, vertikal verlaufende erste Aufnahmenut (126) zur Aufnahme einer ersten Rippe (206) des Transportmittels (200); sowie
eine erste zylindrische Kavität (140) zur Aufnahme eines ersten Riegelelements (110), welche zur Seite des Transportmittels (200) hin geöffnet und relativ zu einer Erstreckungsebene (154) der ersten Aufnahmenut (126) geneigt ist.

2. Greifkörper (104) nach Anspruch 1, **gekennzeichnet durch** eine zweite Aufnahmenut (127), welche insbesondere die erste Aufnahmenut (126) kreuzt, zur Aufnahme einer zweiten Rippe (204) des Transportmittels (200).

3. Greifkörper (104) nach Anspruch 1 oder 2, **gekennzeichnet durch** eine zweite zylindrische Kavität (142) zur Aufnahme eines zweiten Riegelelements (112), welche zur Seite des Transportmittels (200) hin geöffnet und relativ zur ersten zylindrischen Kavität (140) geneigt ist.

4. Greifkörper (104) nach Anspruch 3, **dadurch gekennzeichnet, dass** die erste zylindrische Kavität (140) und die zweite zylindrische Kavität (142) beiderseits der ersten Aufnahmenut (126) angeordnet sind.

5. Greifkörper (104) nach Anspruch 3 oder 4 , **dadurch gekennzeichnet, dass** die erste zylindrische Kavität (140) und die zweite zylindrische Kavität (142) sich entlang einander kreuzender Achsen erstrecken.

6. Greifkörper (104) nach einem der vorhergehenden Ansprüche, **gekennzeichnet durch** mindestens eine obere Stützfläche (152), welche das Transportmittel (200) nach oben hin abstützt.

7. Greifkörper (104) nach einem der vorhergehenden Ansprüche, **gekennzeichnet durch** einen metallischen Werkstoff und/oder durch Herstellung mittels eines generativen Fertigungsverfahren, insbesondere durch selektives Laserschmelzen oder selektives Lasersintern.

8. Greifkörper (104) nach einem der vorhergehenden Ansprüche, **gekennzeichnet durch** eine im metallischen Werkstoff ausgebildete Medienführung (106, 107, 108) zum Herbeiführen einer mechanischen Bewegung (300) der Riegelelemente (110, 112), wobei insbesondere die Medienführung (106, 107, 108) als Druckluftleitung ausgebildet ist.

9. Greifkörper (104) nach einem der vorhergehenden Ansprüche, **dadurch gekennzeichnet, dass** das Transportmittel (200) eine Transportkiste, insbesondere ein Kleinladungsträger, ist.

10. Greifvorrichtung (100) zum Greifen eines Transportmittels (200), umfassend:
einen Greifkörper (104) nach einem der Ansprüche 1, 2, 6, 7, 8 und 9; sowie
ein erstes Riegelelement (110), welches in der ersten zylindrischen Kavität (140) längsverschieblich angeordnet ist.

11. Greifvorrichtung (100) zum Greifen eines Transportmittels (200), umfassend:
einen Greifkörper (104) nach einem der Ansprüche 3 bis 5;
ein erstes Riegelelement (110), welches in der ersten zylindrischen Kavität (140) längsverschieblich angeordnet ist; und
ein zweites Riegelelement (112), welches in der zweiten zylindrischen Kavität (142) längsverschieblich angeordnet ist.

12. Verfahren zum Greifen eines Transportmittels (200), umfassend:
Aufnehmen einer ersten Rippe (206) des Transportmittels (200) in einer vertikal verlaufenden ersten Aufnahmenut (126) eines Greifkörpers (104);
Abstützen des Transportmittels (200) zur Seite des Transportmittels (200) hin an mindestens einer seitlichen Stützfläche (150) des Greifkörpers (104); und
Bewegen eines ersten Riegelelements (110) aus einer ersten zylindrischen Kavität (140) des Greifkörpers (104) in relativ zu einer Erstreckungsebene der ersten Aufnahmenut (126) geneigter Richtung zur Seite des Transportmittels (200), um den Greifkörper (104) mit dem Transportmittel (200) zu verriegeln.

13. Verfahren nach Anspruch 12, wobei mittels des Bewegens des ersten Riegelelements (110) das erste Riegelelement (110) ausgehend von dem Greifkörper (104) in eine erste Bohrung (202) des Transportmittels (200) eingeführt wird.

14. Verfahren nach Anspruch 12 oder 13, umfassend:
Bewegen des ersten Riegelelements (110) aus der ersten zylindrischen Kavität (140) sowie eines zweiten Riegelelements (112) aus einer zweiten zylindrischen Kavität (142) des Greifkörpers (104) in relativ zueinander geneigten Richtungen zur Seite des Transportmittels (200), um den Greifkörper (104) mit dem Transportmittel (200) zu verriegeln.

15. Verfahren nach Anspruch 14, wobei mittels des Bewegens des ersten und zweiten Riegelelements (110, 112) das erste und zweite Riegelelement (110, 112) ausgehend von dem Greifkörper (104) in zwei relativ zueinander geneigte Bohrungen (202, 203) des Transportmittels (200) eingeführt werden.

16. Verfahren nach einem der Ansprüche 12 bis 15, **dadurch gekennzeichnet, dass** das Transportmittel (200) eine Transportkiste, insbesondere ein Kleinladungsträger, ist.

## Claims

1. Gripping body (104) for gripping a means of transport (200),
comprising:
at least one lateral support surface (150) which supports the means of transport (200) towards one side of the means of transport (200);
a vertically extending first receiving groove (126) open towards the side of the means of transport (200) for accommodating a first rib (206) of the means of transport (200); and
a first cylindrical cavity (140) for accommodating a first locking element (110), which is open towards the side of the means of transport (200) and is inclined relative to an extension plane (154) of the first receiving groove (126).

2. Gripping body (104) according to claim 1, **characterized by** a second receiving groove (127), which in particular crosses the first receiving groove (126), for accommodating a second rib (204) of the means of transport (200).

3. Gripping body (104) according to claim 1 or 2, **characterized by** a second cylindrical cavity (142) for accommodating a second locking element (112), which is open towards the side of the means of transport (200) and is inclined relative to the first cylindrical cavity (140).

4. Gripping body (104) according to claim 3, **characterized in that** the first cylindrical cavity (140) and the second cylindrical cavity (142) are arranged on both sides of the first receiving groove (126).

5. Gripping body (104) according to claim 3 or 4, **characterized in that** the first cylindrical cavity (140) and the second cylindrical cavity (142) extend along intersecting axes.

6. Gripping body (104) according to one of the preceding claims, **characterized by** at least one upper support surface (152) which supports the means of transport (200) upwards.

7. Gripping body (104) according to one of the preceding claims, **characterized by** a metallic material and/or by production by means of a generative manufacturing process, in particular by selective laser melting or selective laser sintering.

8. Gripping body (104) according to one of the preceding claims, **characterized by** a media guide (106, 107, 108) formed in the metallic material for bringing about a mechanical movement (300) of the locking elements (110, 112), wherein in particular the media guide (106, 107, 108) is designed as a compressed air line.

9. Gripping body (104) according to one of the preceding claims, **characterized in that** the means of transport (200) is a transport box, in particular a small load carrier.

10. Gripping device (100) for gripping a means of transport (200), comprising:
a gripping body (104) according to one of claims 1, 2, 6, 7, 8 and 9; and
a first locking element (110), which is arranged longitudinally displaceably in the first cylindrical cavity (140).

11. Gripping device (100) for gripping a means of transport (200), comprising:
a gripping body (104) according to one of claims 3 to 5;
a first locking element (110) longitudinally displaceably arranged in the first cylindrical cavity (140); and
a second locking element (112) longitudinally displaceably arranged in the second cylindrical cavity (142).

12. Method for gripping a means of transport (200), comprising:
accommodating a first rib (206) of the means of transport (200) in a vertically extending first receiving groove (126) of a gripping body (104);
supporting the means of transport (200) towards the side of the means of transport (200) on at least one lateral support surface (150) of the gripping body (104); and
moving a first locking element (110) out of a first cylindrical cavity (140) of the gripping body (104) in a direction inclined relative to an extension plane of the first receiving groove (126) to the side of the means of transport (200) in order to lock the gripping body (104) to the means of transport (200).

13. Method according to claim 12, wherein by means of the movement of the first locking element (110), the first locking element (110) is inserted into a first bore (202) of the means of transport (200) starting from the gripping body (104).

14. Method according to claim 12 or 13, comprising:
moving the first locking element (110) out of the first cylindrical cavity (140) and a second locking element (112) out of a second cylindrical cavity (142) of the gripping body (104) in directions inclined relative to each other to the side of the means of transport (200) in order to lock the gripping body (104) to the means of transport (200).

15. Method according to claim 14, wherein by means of moving the first and second locking elements (110, 112), the first and second locking elements (110, 112) are inserted into two bores (202, 203) of the means of transport (200) inclined relative to each other, starting from the gripping body (104).

16. Method according to one of claims 12 to 15, **characterized in that** the means of transport (200) is a transport box, in particular a small load carrier.

## Revendications

1. Élément de préhension (104) pour la préhension d'un moyen de transport (200), comportant :
au moins une surface d'appui latérale (150) qui soutient le moyen de transport (200) vers un côté du moyen de transport (200) ;
une première rainure de réception (126) verticale, ouverte vers le côté du moyen de transport (200), pour recevoir une première nervure (206) du moyen de transport (200) ; et
une première cavité cylindrique (140) pour recevoir un premier élément de targette (110), qui est ouverte vers le côté du moyen de transport (200) et inclinée par rapport à un plan d'extension (154) de la première rainure de réception (126).

2. Élément de préhension (104) selon la revendication 1, **caractérisé en ce qu'**il comporte une deuxième rainure de réception (127), qui croise en particulier la première rainure de réception (126), pour recevoir une deuxième nervure (204) du moyen de transport (200).

3. Élément de préhension (104) selon la revendication 1 ou 2, **caractérisé en ce qu'**il comporte une deuxième cavité cylindrique (142) pour recevoir un deuxième élément de targette (112), qui est ouverte vers le côté du moyen de transport (200) et inclinée par rapport à la première cavité cylindrique (140).

4. Élément de préhension (104) selon la revendication 3, **caractérisé en ce que** la première cavité cylindrique (140) et la deuxième cavité cylindrique (142) sont disposées de part et d'autre de la première rainure de réception (126).

5. Élément de préhension (104) selon la revendication 3 ou 4, **caractérisé en ce que** la première cavité cylindrique (140) et la deuxième cavité cylindrique (142) s'étendent le long d'axes qui se croisent.

6. Élément de préhension (104) selon l'une des revendications précédentes, **caractérisé en ce qu'**il comporte au moins une surface d'appui supérieure (152) qui soutient le moyen de transport (200) vers le haut.

7. Élément de préhension (104) selon l'une des revendications précédentes, **caractérisé en ce qu'**il comporte un matériau métallique et/ou **caractérisé par** une fabrication au moyen d'un procédé de fabrication génératif, en particulier par fusion sélective par laser ou frittage sélectif par laser.

8. Élément de préhension (104) selon l'une des revendications précédentes, **caractérisé en ce qu'**il comporte un conduit de fluide (106, 107, 108) formée dans le matériau métallique pour produire un mouvement mécanique (300) des éléments de targette (110, 112), le conduit de fluide (106, 107, 108) étant en particulier réalisé comme une conduite d'air comprimé.

9. Élément de préhension (104) selon l'une des revendications précédentes, **caractérisé en ce que** le moyen de transport (200) est une caisse de transport, en particulier un support de petites charges.

10. Dispositif de préhension (100) pour la préhension d'un moyen de transport (200), comprenant :
un élément de préhension (104) selon l'une des revendications 1, 2, 6, 7, 8 et 9 et
un premier élément de targette (110) qui est disposé dans la première cavité cylindrique (140) avec possibilité de translation longitudinale.

11. Dispositif de préhension (100) pour la préhension d'un moyen de transport (200), comprenant :
un élément de préhension (104) selon l'une des revendications 3 à 5 ;
un premier élément de targette (110), qui est disposé dans la première cavité cylindrique (140) avec possibilité de translation longitudinale et
un deuxième élément de targette (112), qui est disposé dans la deuxième cavité cylindrique (142) avec possibilité de translation longitudinale.

12. Procédé pour la préhension d'un moyen de transport (200), comprenant :
la réception d'une première nervure (206) du moyen de transport (200) dans une première rainure de réception (126) verticale d'un élément de préhension (104) ;
l'appui du moyen de transport (200) vers le côté du moyen de transport (200) sur au moins une surface d'appui latérale (150) de l'élément de préhension (104) et
le déplacement d'un premier élément de targette (110) à partir d'une première cavité cylindrique (140) de l'élément de préhension (104), dans une direction inclinée par rapport à un plan d'extension de la première rainure de réception (126), vers le côté du moyen de transport (200) pour verrouiller l'élément de préhension (104) avec le moyen de transport (200).

13. Procédé selon la revendication 12, dans lequel le déplacement du premier élément de targette (110) introduit le premier élément de targette (110), à partir de l'élément de préhension (104), dans un premier trou percé (202) du moyen de transport (200).

14. Procédé selon la revendication 12 ou 13, comprenant le déplacement du premier élément de targette (110) hors de la première cavité cylindrique (140) et d'un deuxième élément de targette (112) hors d'une deuxième cavité cylindrique (142) de l'élément de préhension (104), dans des directions inclinées l'une par rapport à l'autre, vers le côté du moyen de transport (200) pour verrouiller l'élément de préhension (104) avec le moyen de transport (200).

15. Procédé selon la revendication 14, dans lequel le déplacement du premier élément de targette et du deuxième (110, 112) introduit le premier élément de targette et le deuxième (110, 112), à partir de l'élément de préhension (104), dans deux trous percés (202, 203) du moyen de transport (200) inclinés l'un par rapport à l'autre.

16. Procédé selon l'une des revendications 12 à 15, **caractérisé en ce que** le moyen de transport (200) est une caisse de transport, en particulier un support de petites charges.
